# EUROPEAN PATENT APPLICATION

(11) **EP 4 674 690 A1**
(43) Date of publication of application: **07.01.2026**
(21) Application number: 24382715.1
(22) Date of filing: 02.07.2024
(51) Int. Cl.: B60R 9/06

(54) **A STORAGE BOX FOR A TOWING VEHICLE**

(71) Applicant: Enganches y Remolques Aragón, S.L., 50016 Zaragoza (ES)
(72) Inventor: BENITO MONREAL, Fernando, 50016 ZARAGOZA (ES)
(74) Representative: ZBM Patents - Zea, Barlocci & Markvardsen

(57) **Abstract**

A storage box (1) couplable with a tow bar of a towing vehicle is provided. The storage box (1) comprises a plastic-injected body (2) and a plastic-injected lid (3) pivotally attached to the plastic-injected body (2). The plastic-injected body (2) comprises a body base (21) and a body wall (22), the body wall (22) comprises a perimeter body rim (23). The plastic-injected lid (3) comprises a lid cover (31) and a lid wall (32), the lid wall (32) comprising a perimeter lid rim (33) having an outer lid flange (34) protruding outwardly from the lid wall (32). One of the perimeter lid rim (33) and the perimeter body rim (23) comprises a protrusion (4) and the other of the perimeter lid rim (33) and the perimeter body rim (23) comprises a receiver (5) to receive the protrusion (4) to form a sealing joint at the closed position.

## Description

The present disclosure relates to a storage box for a towing vehicle, and a load carrier assembly having the storage box and a support structure couplable to a tow bar of a towing vehicle. The present disclosure also relates to a method for manufacturing the mentioned storage box.

### BACKGROUND

Tow bars or tow hitches are devices commonly used for connecting a towing vehicle or a tractor vehicle to a trailer or to a load carrier. The towing vehicle may thus pull the trailer and support the load carrier. Tow bars or hitches may be mounted on the rear part of towing vehicles, e.g. in the area of the rear bumper of a car or a truck, for hooking a load carrier.

Load carriers are equipment for carrying different objects on a tow bar of a towing vehicle. When the towing vehicle is travelling, load carriers are only supported by the tow bar. Accordingly, no wheels of the load carrier contact the road when the towing vehicle moves. Therefore, load carriers need to be firmly attached to the vehicle. For connecting a load carrier to a vehicle, tow bars or hitches generally have the form of a tow ball which allows a coupling device of the load carrier to clamp it and thus establishing a mechanical connection between the towing vehicle and the load carrier.

Load carriers are generally configured to carry objects such as sports equipment, e.g. bicycles or skis or luggage. Storage boxes may also be examples of load carriers designed to carry luggage or camping equipment. Load carriers thus significantly increase the carrying capacity of the towing vehicle.

Currently, the storage boxes may be manufactured by thermoforming. Thermoforming consists of heating a thermoplastic sheet or plate so that it can be softened and adapted to the shape of a mould by the action of vacuum pressure or by means of a counter-mould. Plastic materials such as, for example, polymethylmethacrylate (PMMA), polystyrene (PS) or acrylonitrile butadiene styrene (ABS) may be used in the thermoforming process.

However, the thermoforming process is generally only suitable for producing thin-walled designs. Furthermore, the thermoforming process is not suitable to obtain pieces with complex geometries. Furthermore, the pieces obtained have no uniformity in thickness. In addition, as the thermoforming processes use thermoplastic sheets with a specific composition, the composition of the thermoformable material cannot be easily adjusted. Accordingly, as thermoforming is limited to the specific composition of the plastic sheets, the material versatility of the thermoforming process is very low.

Alternatively, the storage boxes may also be manufactured by rotational moulding, also called roto-moulding. Roto-moulding consists of introducing a thermoplastic material (solid block or powder) into a heated mould. Then, the mould is slowly rotated causing the softened material to disperse and to adhere to the walls of the mould forming a hollow piece. The main material used in rotational moulding is polyethylene (PE). The rotational moulding is suitable to obtain a small production of hollow pieces, including geometrically complex shapes. However, the rotational moulding technique implies long cycle times for producing a piece. Furthermore, roto-moulding generally requires materials with high thermal stability requirements. This may involve higher material costs and a limited range of materials available.

The present disclosure provides examples of systems and methods that at least partially resolve some of the aforementioned disadvantages.

### SUMMARY

According to one aspect of the present disclosure, a storage box couplable with a tow bar of a towing vehicle is provided. The storage box comprises a plastic-injected body for carrying a load and a plastic-injected lid pivotally attached to the plastic-injected body for shifting the storage box between a closed position and an open position.

The plastic-injected body comprises a body base and a body wall. The body wall extends from the body base and comprises a perimeter body rim. The plastic-injected lid comprises a lid cover, and a lid wall extending from the lid cover. The lid wall comprises a perimeter lid rim having an outer lid flange protruding outwardly from the lid wall. The perimeter lid rim and the perimeter body rim face each other when the storage box is in the closed position. In addition, one of the perimeter lid rim and the perimeter body rim comprises a protrusion and the other of the perimeter lid rim and the perimeter body rim comprises a receiver to receive the protrusion to form a sealing joint at the closed position.

The storage box may be employed for transporting luggage or camping equipment. The storage box of this disclosure is a rear storage box. The storage box is suitable for being coupled with a towing vehicle through a coupling device.

According to this aspect, the engagement of the protrusion with the receiver may prevent a liquid, e.g. rainwater, from entering the storage box at the closed position. An enhanced sealing joint may thus be formed when the storage box is at the closed position. The outer lid flange may further guide water outwardly. Waterproof at the closed position may thus be enhanced.

Furthermore, as both the body and the lid are made by plastic injection moulding, the storage box can be manufactured simply and cost-effectively. Furthermore, the annual production may be increased. For example, the average annual production of storage boxes in a thermoforming process line is about 3000 - 4000 per year. However, the annual production may be increased, e.g. to 20000 storage boxes per year, using an injection moulding process.

The plastic injection moulding process may also allow the production of complex geometrical shapes for the body and the lid. This may allow for manufacturing a dimensional accurate and precise protrusion and receiver to enhance the sealing effect. Furthermore, a relatively small protrusion and receiver may be obtained. The use of material may thus be optimized. Contrary to other manufacturing processes, the injection moulding process may also allow for forming reinforcing ribs or nerves.

Furthermore, the plastic injection moulding increases the versatility of the materials used. For example, the range of materials suitable in injection moulding is greater than in roto moulding. For example, recycled materials may be used. In addition, contrary to the thermoplastic sheets, the material for injection moulding may be easily adjusted or adapted. This may allow for using cheaper plastics.

For example, the plastic-injected body and/or the plastic-injected lid may comprise a thermoplastic polymer.

The thermoplastic polymer may comprise polypropylene. Polypropylene has a relatively low density and is relatively cheap. Accordingly, lighter and relatively cheaper storage boxes may be obtained. Furthermore, polypropylene provides a high mechanical impact resistance, a good chemical resistance and a high ultraviolet resistance. The injection moulding process thus allows for using polypropylene.

The thermoplastic polymer may comprise a recycled thermoplastic polymer. Therefore, using recycled polymers allows obtaining an environmentally friendly storage box. Manufacturing the body and the lid with an injection moulding process may thus allow using recycled materials.

The origin of the thermoplastic recycled material may be diverse. The thermoplastic recycled material may be recycled polyethene. For example, the thermoplastic material may comprise plastic material from fishing nets. Polyethylene from fishing nets may be recycled and reused as raw material for the storage box. In further examples, polyethene from Tetra Brik may be recycled and reused for injecting the body and/or the lid. Other examples, of thermoplastic recycled materials may be post-consumer recycled plastics. Post-consumer recycled plastic may comprise post-consumer recycled polyethene. Recycled thermoplastic materials, e.g. recycled polyethene, may thus be used for manufacturing the storage box.

In some examples, the thermoplastic polymer may comprise different polymers. Additives may also be added to the thermoplastic polymer. In some examples, the thermoplastic polymer may comprise polypropylene and one or more recycled thermoplastic polymers. In other examples, the thermoplastic polymer may comprise polypropylene and polythene. In further examples, the thermoplastic polymer may comprise polypropylene, polythene and recycled thermoplastic polymers.

The amount of polypropylene in the thermoplastic polymer may be higher than 40% in weight, e.g. higher than 60% in weight. This may ensure a storage box with good mechanical properties and adequate ultraviolet (UV) resistance. The thermoplastic material may comprise more than 50% of polypropylene in weight and less than 30% of polythene, e.g. recycled polythene. For example, the polypropylene may be about 75% in weight and the recycled polythene about 25% in weight. The thermoplastic material may also comprise impurities and additives.

In some examples, the body wall comprises a body rear wall and a body front wall. The body rear wall comprises a body rear rim and the body front wall comprises a body front rim. The body wall may further comprise a first and a second body lateral wall with respective first and second body lateral rims. The perimeter lid rim may thus comprise the body rear rim, the body front rim and the first and second body lateral rims.

In some examples, the lid wall comprises a lid rear wall with a lid rear rim and a lid front wall with a lid front rim. The lid wall further comprises first and second lid lateral walls with respective first and second lid lateral rims. The perimeter lid rim may thus comprise the lid front rim, the lid rear rim and the first and the second lateral rims.

In some examples, the first and second body lateral walls extend substantially perpendicular from the body base. The first and the second body lateral wall may comprise a stepped shape. Furthermore, the first and second lid lateral wall may have a complementary stepped shape matching the first and second body lateral wall at the closed position.

The mentioned stepped configuration of the respective body lateral walls and the lid lateral walls may allow a large access area to the interior of the body when the lid is in the open position.

According to some examples, the plastic-injected body comprises reinforcing ribs. Impact resistance and/or mechanical properties may thus be increased. Using an injection moulding process allows forming these reinforcing ribs. The reinforcing ribs may be arranged at an outer side of the body base and/or an outer side of the body rear wall.

According to another aspect, the present disclosure also provides a load carrier assembly for a towing vehicle. The load carrier assembly comprises a storage box according to any the examples herein and a support structure connected to the body base of the storage box. The support structure comprises a coupling device couplable with a tow bar of a towing vehicle.

According to another aspect, the present disclosure also provides a method for manufacturing a storage box according to any of the examples herein. The method comprises plastic injection moulding a body plastic material to form the plastic injected body and plastic injection moulding a lid plastic material to form the plastic injected lid. The manufacturing method further comprises pivotally attaching the plastic-injected body to the plastic-injected lid.

Advantages derived from these aspects may be similar to those mentioned regarding the first aspect. Due to the plastic injection moulding process, the storage box can be manufactured in a simple way, allowing the production of complex geometrical shapes for the body and the lid, and with a high production rate and low cost. Furthermore, the plastic injection moulding process allows the possibility of changing the formulation of the raw material, if needed.

### BRIEF DESCRIPTION OF THE DRAWINGS

Non-limiting examples of the present disclosure will be described in the following, with reference to the appended drawings, in which:
Figures 1 and 2 are respectively a perspective view and a front elevation view of a storage box according to one example of the present disclosure, at the closed position;
Figure 3 is a perspective view of the storage box of Figures 1 and 2, at the opened position;
Figure 4 is a perspective view of the storage box of Figure 3, showing the protrusion and the receiver at the opened position;
Figures 5 and 6 are respectively a side view of the storage box at the closed position and at the open position according to an example of the present disclosure;
Figures 7 and 8 are respectively cross-sectional views along the line VII-VII of Figures 5 and 6;
Figure 9 is a schematical side view of a storage box according to an example of the present disclosure;
Figures 10 and 11 are respectively a side view and an isometric view of a storage box according to an example of the present disclosure;
Figures 12, 13 and 14 are respectively a side view, a rear view and a bottom view of a load carrier assembly according to an example of the present disclosure; and
Figure 15 is a flowchart of a method for manufacturing a storage box according to an example of the present disclosure.

### DETAILED DESCRIPTION OF EXAMPLES

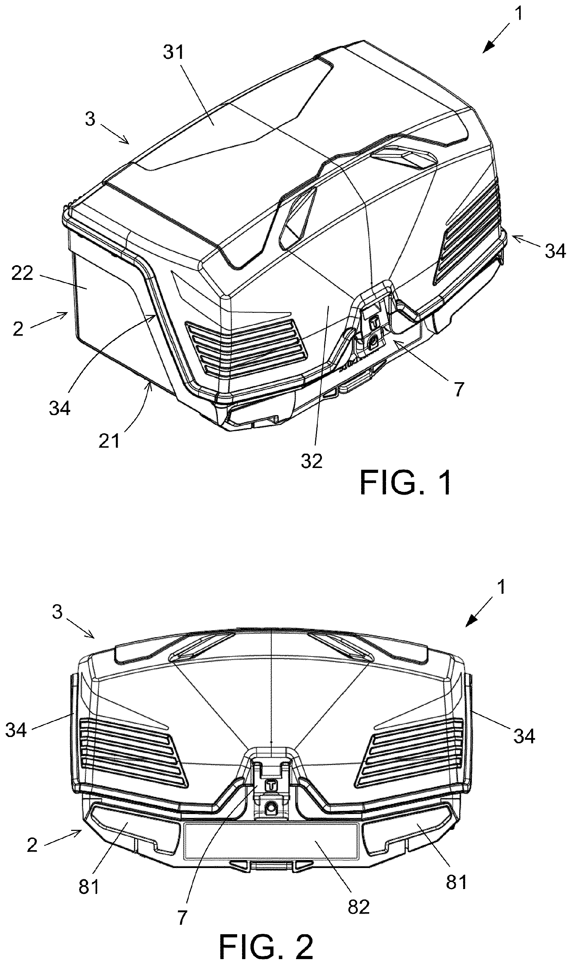

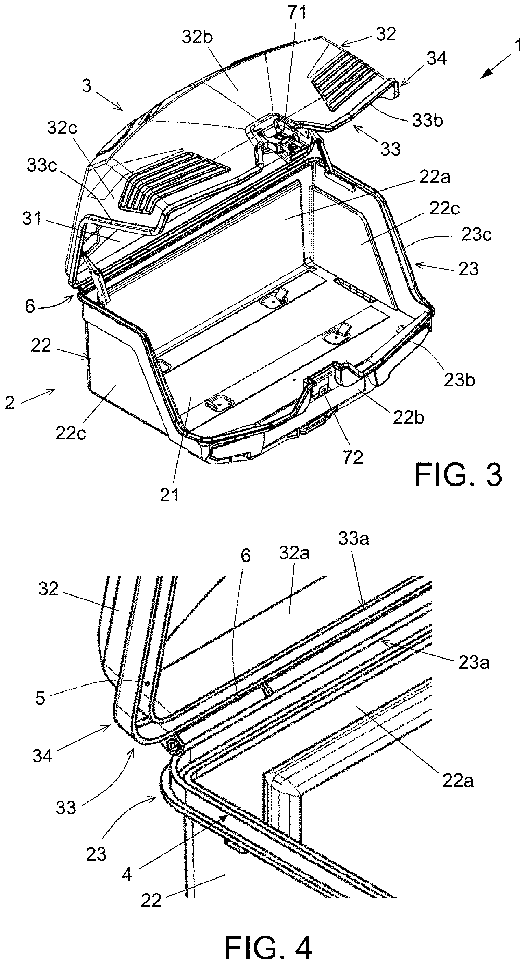

Figures 1 to 4 show a storage box 1 couplable with a tow bar of a towing vehicle, according to one example of the present disclosure. The storage box 1 comprises a plastic-injected body 2 for carrying a load and a plastic-injected lid 3 pivotally attached to the plastic-injected body 2 for shifting the storage box 1 between a closed position (Figures 1 and 2) and an open position (Figures 3 and 4).

The plastic-injected body 2 comprises a body base 21, and a body wall 22 extending from the body base 21. The body wall 22 may enclose a load arranged at the body base 21. When the storage box 1 is coupled to the tow bar of a towing vehicle, the body base 21 adopts a substantially horizontal position with respect to the ground. The body wall 22 of this example extends substantially perpendicular from the body base 21.

The body wall 22 comprises a perimeter body rim 23. In some examples, the perimeter body rim 23 may extend along a portion of the perimeter of the body wall 22, e.g. at least 80% of the perimeter of the body wall 22. In other examples, the perimeter body rim 23 may extend along the entire perimeter of the body wall 22.

The plastic injected lid 3 comprises a lid cover 31 and a lid wall 32 extending from the lid cover 31. The lid wall 32 extends substantially perpendicular from the lid cover 31. The lid cover 31 is substantially parallel to the ground when the storage box is coupled with the tow hitch. The lid wall 32 comprises a perimeter lid rim 33. The perimeter lid rim 33 may extend along a portion or the entire perimeter of the perimeter of the lid wall 32.

The perimeter lid rim 33 and the perimeter body rim 23 face each other when the storage box 1 is at the closed position. When the storage box is coupled with the towing vehicle, the body wall 22 extends upwardly from the body base 21 and the lid wall 32 extends downwardly from the lid cover 31.

The perimeter lid rim 33 is configured to engage with the perimeter body rim 23. The perimeter lid rim 33 engages with the perimeter body rim 23 when the storage box is at the closed position.

In this example, as shown in more detail in Figure 4, the perimeter body rim 23 comprises a protrusion 4 and the perimeter lid rim 33 comprises a receiver 5 to receive the protrusion 4. In other examples, the perimeter body rim 23 comprises the receiver 5 and the perimeter lid rim 33 comprises the protrusion. The sealing joint formed by the engagement of the protrusion 4 with the receiver 5 may prevent a liquid, e.g. rainwater, from entering inside the storage box 1 at the closed position.

The perimeter lid rim 33 comprises an outer lid flange 34 protruding outwardly from the lid wall 32. The outer lid flange 34 may further guide water outwardly from the sealing joint. Waterproof may thus be enhanced.

In this example, the outer lid flange 34 comprises a L-shaped cross-section protruding outwardly from the lid wall 32. The L-shaped cross-section of the outer lid flange 34 and the lid wall 32 forms the receiver 5 defining a U-shaped cross-section. Thus, in the closed position, the U-shaped cross-section of the receiver 5 is oriented downwards, and the protrusion 4 is oriented upwards for coupling to each other.

The U-shaped cross-section defines a channel to receive the protrusion 4. The U-shaped cross-section of the perimeter lid rim 33 may extend along the entire perimeter lid rim 33. Similarly, the protrusion 4 of the perimeter body rim 23 may extend along the entire perimeter body rim 23.

The body wall 22 of this example comprises a body rear wall 22a with a body rear rim 23a, a body front wall 22b with a body front rim 23b. The body wall 22 of this example further comprises first and second body lateral walls 22c with respective first and second body lateral rims 23c of the perimeter body rim 23.

In this example, the body rear wall 22a, the body front wall 22b and the first and second body lateral walls 22c are substantially perpendicular to the body base 21. The body rear wall 22a is substantially parallel to the body front wall 22b. The body lateral walls 22c are parallel to each other. The body lateral walls 22c extend substantially perpendicular from the body rear wall 22a to the body front wall 22b. The body front wall 22b and the body rear wall 22a extend substantially perpendicular from the first lateral wall to the second lateral wall.

Likewise, the lid wall 32 comprises a lid rear wall 32a and a lid front wall 32b substantially parallel to the lid rear wall 32a. The lid wall 32 further comprises a first and a second lid lateral wall 32c extending substantially perpendicular from the lid rear wall 32a to the lid front wall 32b. The lid rear wall 32a comprises a lid rear rim 33a, the lid front wall 32b comprises a lid front rim 33b; and first and second lid lateral walls 32c comprise respective first and second lid lateral rims 33c. The perimeter lid rim 33 is thus defined by the lid rear rim 33a, the lid front rim 33b and the lid lateral rims 33c.

In this example, the body front wall 22b further comprises a lower portion 8 extending from the body base 21. The lower portion extends downward from the body base 21. The lower portion comprises two recesses 81 for assembling respective side lights electrically connected to the towing vehicle. Furthermore, the lower plate 8 of the body front wall 22b comprises a recess 82 for assembling a license plate.

In this example, the storage box 1 further comprises a locking device 7. The locking device 7 of this example comprises a first coupling portion 71 and a second coupling portion 72. The second coupling portion 72 is configured to engage the first coupling portion 71 at the closed position. In this example, the first coupling portion 71 is arranged at a central region of the body front wall 22b, and the second coupling portion 72 is arranged at a central region of the lid front wall 32b.

The locking device 7 of this example, further comprises a locking member to lock the first coupling portion 71 and the second coupling portion 72 at the closed position.

In some examples, the first and second coupling elements 71, 72 of the locking device 7 are snap-fit joint elements.

In this example, the body front rim 23b and the lid front rim 33b at their respective central regions, are free from the protrusion 4 and the receiver 5, wherein the first and second coupling elements 71, 72 are arranged.

Alternatively, in other examples, the protrusion 4 and the receiver 5 may extend completely along the perimeter body rim 23 and the perimeter lid rim 33.

In some examples, the plastic-injected body 2 and/or the plastic-injected lid 3 comprise a thermoplastic polymer. The materials or the composition of the plastic-injected body 2 and of the plastic-injected lid 3 may be different. For example, as the mechanical requirements of the plastic-injected body 2 are greater than of the plastic-injected lid 3, the amount of polypropylene in the plastic-injected body 2 may be greater than in the plastic-injected lid 3. The amount of recycled thermoplastic polymer, e.g. recycled polyurethane may thus be greater in the plastic-injected lid 3 than in the plastic-injected body 2.

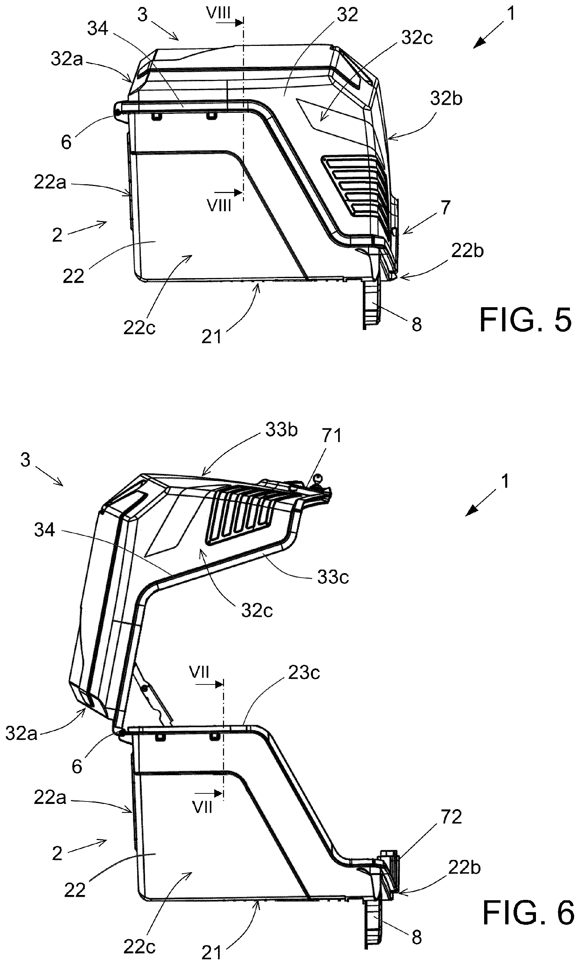

Figures 5 and 6 are respectively a side view of the storage box at the closed position and at the open position according to an example of the present disclosure.

In this example, the first and the second body lateral walls 22c extend substantially perpendicular from the body base 21. The body lateral walls 22c extend upwardly from the body base 21. In this example, the body front wall 22b further comprises the lower portion 8 extending downwardly from the body base 21.

As can be seen in these figures, the lid lateral walls 32c extend from the lid rear wall 32a to the lid front wall 32b, and the body lateral walls 22c extend from the body rear wall 22a to the body front wall 22b.

In this example, the first and the second body lateral walls 22c comprise a stepped shape. The height of the body lateral walls 22c is greater at the portion adjacent to the body rear wall 22a than at the portion adjacent to the body front wall 22b. The body lateral rim 23c is thus arranged at different heights.

The first and the second lid lateral wall 32c of this example further comprises a stepped shape. The first and the second lid lateral wall 32c has a complementary stepped shape that matches the stepped shape of the body lateral walls 22c at the closed position. The lid lateral rim 33c and the body lateral rim 23c of this example thus follow the stepped shape.

The stepped configuration of the respective body lateral walls 22c and lid lateral walls 32c may allow a large access area to the interior of the body 2 when the lid 3 is at the open position.

In this example, the storage box 1 further comprises a hinge connection assembly 6 for pivotally attaching the plastic injected lid 3 to the plastic injected body 2. The hinge connection assembly 6 pivotally connects the body rear wall 22a to the lid rear wall 32a.

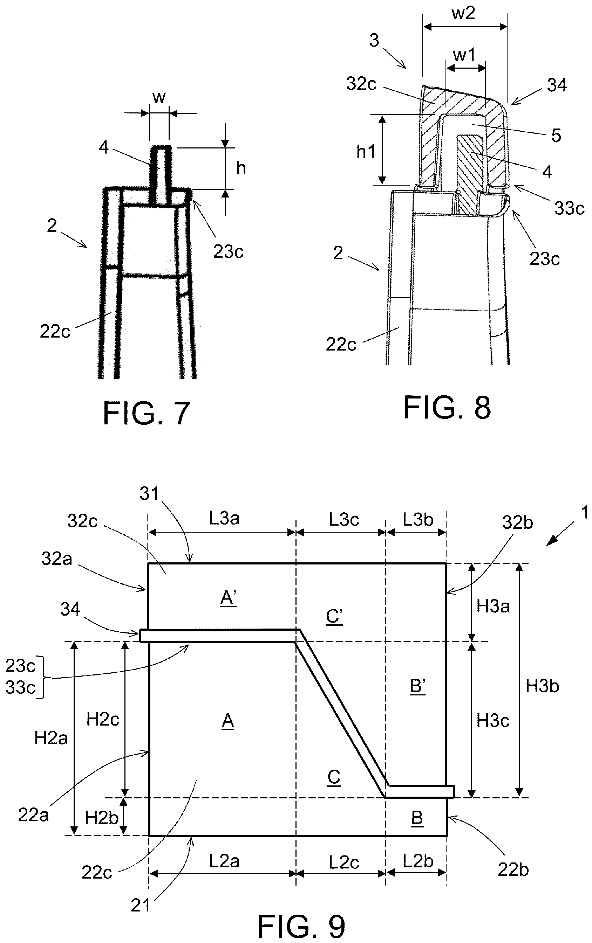

Figures 7 and 8 are respectively cross-sectional views along the line VII-VII of Figures 5 and 6. In these figures, the protrusion 4 is arranged at the body 1, while the receiver 5 is arranged at the lid 3

The protrusion 4 extends upwardly from a rim flange of the body lateral rim 23c. In some examples, the protrusion 4 comprises a height h less of 25 mm, preferably between 20 and 5 mm, and more preferably about 13 mm. The width w of the protrusion may be less of 15 mm, preferably between 10 and 3 mm, and more preferably about 6 mm.

The receiver 5 of this example comprises a U-shape cross-section. The protrusion 4 is enclosed by the receiver 5 when the lid 3 closes the body 2. The receiver 5 of this example, is defined by the lid wall 32 and the outer lid flange 34. The outer lid flange 34 comprises an L-shaped cross-section. The outer lid flange 34 comprises a first portion and a second portion. The first portion protrudes substantially perpendicular from the lid lateral wall 32c. The second portion is substantially perpendicular to the first portion. The protrusion 4 is thus enclosed between the second portion of the outer lid flange 34 and the lid lateral wall 32c.

The receiver 5 may comprise a height h1 less of 30 mm, preferably between 25 and 10 mm, and more preferably about 16 mm. The receiver may comprise a width w1 less than 20 mm, preferably between 15 and 7 mm, and more preferably 11 mm.

Furthermore, the receiver 5 may comprise an external width w2 less than 30 mm, preferably between 25 and 18 mm, and more preferably 22 mm.

The shape of the protrusion may be similar at different portions of the perimeter body rim 23. Similarly, the shape of the receiver may be similar at different portions of the perimeter lid rim 33.

Contrary to other known plastic manufacturing process (e.g. thermoforming and rotational moulding), plastic injection moulding process allows obtaining such a mentioned small dimension for both the protrusion 4 and the receiver 5. A narrow outer lid flange 34 suitable to guarantee the waterproofing of the storage box 1.

Figure 9 is a schematical side view of a storage box according to an example of the present disclosure. The body lateral wall 22c and the lid lateral wall 32c comprise a stepped shape.

The body lateral wall 22c of this example comprises a first step portion A adjacent to the body rear wall 22a. The body lateral wall 22c has a first height H2a, such that the body lateral rim 23c at said first portion A is substantially parallel to the body base 21.

In this example, the body lateral wall 22c further comprises a second step portion B adjacent to the body front wall 22b. The body lateral wall 22c at the second step portion B has a second height H2b, such that the body lateral rim 23c at said second step portion B is substantially parallel to the body base 21. In this example, the second height H2b is lower than the first height H2a.

In addition, the body lateral wall 22c of this figure comprises a third step portion C, between the first step portion A and second step portion B. The body lateral wall 22c at said third step portion C has a third height H2c decreasing from the first step portion A to the second step portion B. The body lateral rim 23c at this third step portion C thus goes down from the first step portion A to the second step portion B.

In this example, the step portions A, B, C of this example extend a step portion length in a direction extending between the body rear wall 22a and the body front wall 22b. The first step portion A extends a first step portion length L2a. The second step portion B extends a second step portion length L2b and the third step portion C extends a third step portion length L2c. Furthermore, in this example, the first step portion length L2a is greater than the second step portion length L2b. Furthermore, the first step portion length L2a is greater than the third step portion length L2c.

lid lateral wall 32c of this example comprises a first step portion A' adjacent to the lid rear wall 32a and a second step portion B' adjacent to the lid front wall 32b. The lid lateral wall 32c further comprises a third step portion C', between the first step portion A' and second step portion B'. The lid lateral wall 32c has a first height H3a at the first step portion A' and a second height H3b at the second step portion B'. The lid lateral rim 33c at the first step portion A' and at the second step portion B' is substantially parallel to the lid cover 31. In this example, the second height H3b is greater than the first height H3a.

The lid lateral wall 32c at the third step portion C' has a third height H3c increasing from the first step portion A' to the second step portion B'. The distance of the lid lateral rim 33c from the lid cover 31 at said third step portion C' thus increases.

In this example, the step portions of the lid lateral wall 32C A', B', C' extend a step portion length in a direction extending between the lid rear wall 32a and the lid front wall 32b. The first step portion A' extends first step portion length L3a; the second step portion B' extends a second step portion length L3b; and the third step portion C' extends a third step portion length L3c. In this example, the first step portion length L3a is greater than the second step portion length L3b. Furthermore, the first step portion length L3a is greater than the third step portion length L3c.

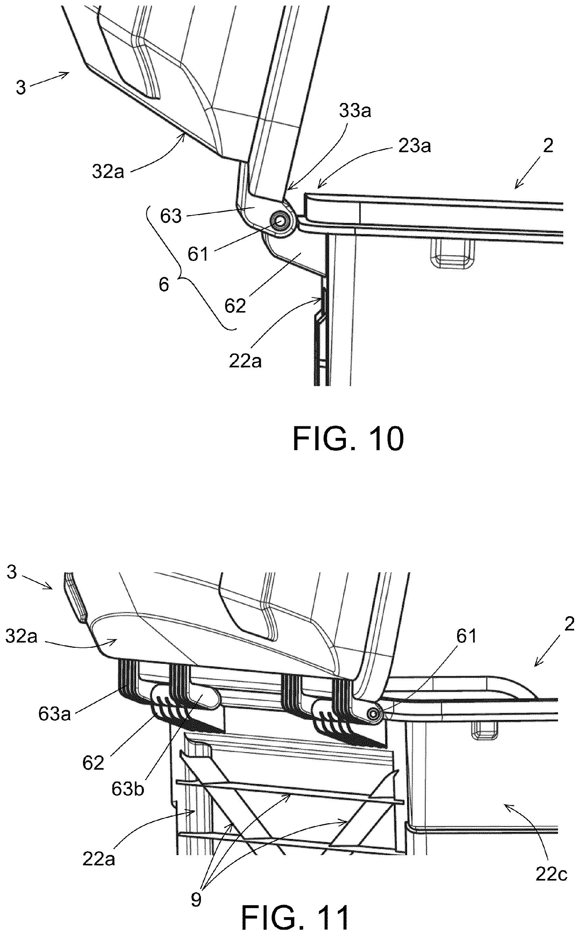

Figures 10 and 11 are respectively a side view and an isometric view of a hinge connection assembly of a storage box according to an example of the present disclosure.

The storage box may comprise one or more hinge connection assemblies 6 of this figure pivotally connects the lid 3 to the body 2. The hinge connection assembly 6 comprises a body hinge support 62 outwardly protruding from the body rear wall 22a and a lid hinge support 63 outwardly protruding from the lid rear wall 32a. The body hinge support 62 is pivotally connected to the lid hinge support 63. As both the body hinge support 62 and the lid hinge support 63 protrudes outwardly from the body rear wall 22a and the lid rear wall 32a, the protrusion 4 and the receiver 5 may completely extend along the body rear rim 23a and the lid rear rim 33a. This may improve the waterproofing of the storage box 1.

The lid hinge support 63 comprises two parallel arms 63a, 63b. The body hinge support 62 is placed between both parallel arms 63a, 63b of the lid hinge support 63. The hinge connection assembly of this example further comprises a hinge shaft 61 passing through a first through hole arranged at the body hinge support 62 and through a second through hole arranged at the lid hinge support 63. The body hinge support 62 and the lid hinge support may thus rotate about the hinge shaft.

In this example, the plastic-injected body 2 comprises reinforcing ribs 9. In this example, a plurality of reinforcing ribs 9 is formed at an outer side of the body rear wall 22a. This reinforcing ribs 9 of this figure may improve the impact resistance and/or the mechanical resistance of the body rear wall 22a without significantly increasing the weight of the storage box. Manufacturing the body through an injection moulding may thus allow for forming this plurality of ribs.

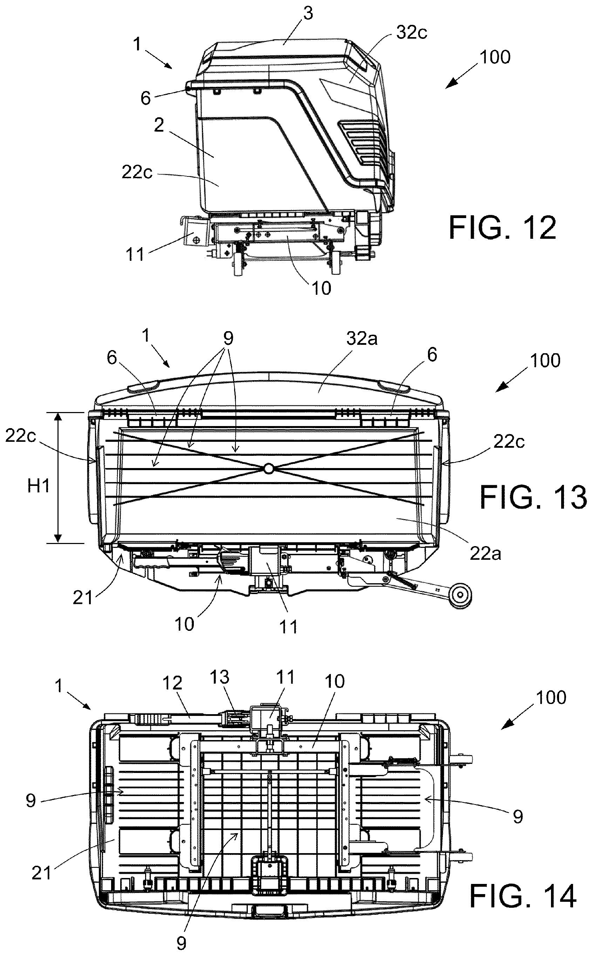

Figures 12, 13 and 14 are respectively a side view, a rear view and a bottom view of a load carrier assembly according to an example of the present disclosure.

The load carrier assembly 100 for a towing vehicle of this example comprises a storage box 1 according to any of the examples herein and a support structure 10 connected to the body base 2 of the storage box 1. The support structure 10 comprises a coupling device 11 couplable with a tow bar of a towing vehicle.

The coupling device 11 of this example comprises a pair of jaws that may clamp a tow ball of the tow bar of the vehicle. The coupling device 11 may thus be clamped onto the tow ball by the pressure exerted by the pair of jaws. In other examples, the coupling device may be configured to be attached to a towing receiver hitch. The coupling device 11 of this example further comprises a lever 12 for clamping and unclamping the tow ball. The lever 12 may be grabbed by a user for pulling up and down the lever 12. In this example, the coupling device 11 may be connected to the tow ball by pushing the lever down and may be released from the tow ball by pulling it up. The coupling device 11 of this example further comprises a coupling device locking system 13 to lock the coupling device 11 onto the tow bar.

The body rear wall 22a of this example extends substantially perpendicular from the body base 21 a body rear wall height H1. The body rear wall 22a extends between the first and second body lateral walls 22c. In this example, the body rear wall height H1 is substantially constant.

In this example, the body 2 comprises a plurality of reinforcing ribs 9. In particular, the reinforcing ribs 9 are arranged at the body base 21 and at the body rear wall 22a.

The reinforcing ribs 9 may extend in a direction between the body lateral walls 22c to increase the mechanical resistance of the body base 21 and of the body rear wall 22a. In addition, the body rear wall 22a comprises a pair of diagonally crossed reinforcing ribs 9. These diagonally crossed reinforcing ribs 9 may be useful for increasing the impact resistance of the storage box.

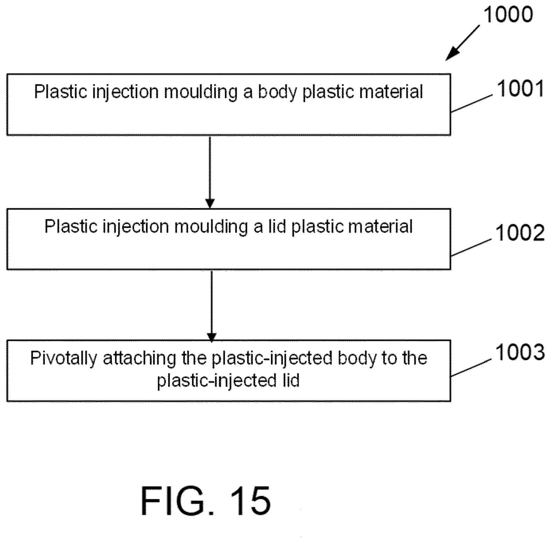

Figure 15 shows a flowchart of a method 1000 for manufacturing a storage box 1 according to an example of the present disclosure. The storage box 1 may be according to any of the examples herein.

The method 1000 comprises plastic injection moulding a body plastic material to form the plastic injected body 2, as represented in block 1001. The body plastic material may be provided in an injection moulding system. For example, the body plastic material may be supplied in the form of pellets, e.g. pellets of thermoplastic polymers. The body plastic material may then be heated to melt or soften this body plastic material. This heat treatment may also be used for mixing the different components of the body plastic materials, e.g. for mixing polypropylene and polyethene.

Then, the melted or softened body plastic material is injected under pressure into a mould cavity defining the shape of the plastic injected body 2. The mould cavity may be formed between two mould parts. One of the mould parts is movable relative to the other of the mould parts.

After injecting the body plastic material into the mould cavity, the body plastic material is cooled down to harden the body plastic material. Then, the mould parts are opened to release the plastic-injected body 2.

The method 1000 further comprises plastic injection moulding a lid plastic material to form the plastic injected lid 3, as represented in block 1002. The injection moulding of the plastic injected lid 3 may be as described regarding the plastic injected body 2. The mould cavity for plastic injection moulding of plastic injected lid 3 defines the shape corresponding to the plastic injected lid 3.

The body plastic material and/or the lid plastic material may be according to any of the examples herein. The body plastic material and/or the lid plastic material may be adjusted depending on the circumstances.

The body plastic material and/or the lid plastic material may comprise a thermoplastic polymer. As explained before, the thermoplastic material may comprise polypropylene and/or thermoplastic recycled material. The thermoplastic recycled material may comprise recycled polyethene.

In some examples, the lid plastic material and the body plastic material may be the same. In other examples, the composition of the lid plastic material may be different to the composition of the body plastic material. For example, the amount of polypropylene in the plastic-injected body 2 may be higher than in the plastic-injected lid 3. The amount of recycled thermoplastic polymers may thus be higher in the plastic-injected lid 3 than in the plastic-injected body 2.

For example, the body plastic material may comprise an amount of polypropylene higher than 40% in weight, optionally higher than 60% in weight, e.g. higher than 80% in weight. For example, the body plastic material may comprise about 75% in weight and recycled polythene about 25% in weight, and impurities or additives.

For example, the lid plastic material may comprise an amount of polypropylene lower than 60 % in weight, e.g. lower than 50% in weight. In some examples, the lid plastic material may comprise about 40% in weight and recycled polythene about 60% in weight, and impurities or additives.

The method 1000 further comprises pivotally attaching the injected plastic-injected body to the plastic-injected lid, as represented at block 1003. The plastic-injected lid may be pivotally attached to the plastic-injected body through the hinge connection assembly 6 according to any of the examples herein.

As disclosed above, since both the body 2 and the lid 3 of the present disclosure is made by a plastic injection, the storage box 1 can be manufactured in a simple and cost-effective way. The plastic injection moulding process may allow the production of complex geometrical shapes for the body 2 and the lid 3. This may allow for manufacturing a dimensional accurate and precise protrusion 4 and receiver 5 to enhance the sealing effect. Furthermore, a relatively small protrusion 4 and receiver 5 may be obtained. The use of material may thus be optimized.

Furthermore, the plastic injection moulding increases the versatility of the materials used. For example, the range of materials suitable in injection moulding is greater than in roto moulding. In addition, contrary to the thermoplastic sheets, the material for injection moulding may be easily adjusted or adapted.

For reasons of completeness, various aspects of the present disclosure are set out in the following numbered clauses:
Clause 1. A storage box (1) couplable with a tow bar of a towing vehicle, the storage box () comprising
   - a plastic injected body (2) for carrying a load; and
   - a plastic injected lid (3) pivotally attached to the plastic injected body (2) for shifting the storage box (1) between a closed position and an open position;

   wherein the plastic-injected body (2) comprises
      - a body base (21), and
      - a body wall (22) extending from the body base (21), the body wall (22) comprising a perimeter body rim (23);
   wherein the plastic-injected lid (3) comprises
      - a lid cover (31), and
      - a lid wall (32) extending from the lid cover (31), the lid wall (32) comprising a perimeter lid rim (33) having an outer lid flange (34) protruding outwardly from the lid wall (32);
   such that the perimeter lid rim (33) and the perimeter body rim (23) face each other when the storage box (1) is in the closed position; and
   wherein one of the perimeter lid rim (33) and the perimeter body rim (23) comprises a protrusion (4) and the other of the perimeter lid rim (33) and the perimeter body rim (23) comprises a receiver (5) to receive the protrusion (4) to form a sealing joint at the closed position.
Clause 2. The storage box (1) according to clause 1, wherein
   - the body wall (22) comprises
      - a body rear wall (22a) with a body rear rim (23a) of the perimeter body rim (23),
      - a body front wall (22b) with a body front rim (23b) of the perimeter body rim (23), and
      - a first and second body lateral walls (22c) with respective first and second body lateral rims (23c) of the perimeter body rim (23); and
   - the lid wall (32) comprises
      - a lid rear wall (32a) with a lid rear rim (33a) of the perimeter lid rim (33),
      - a lid front wall (32b) with a lid front rim (33b) of the perimeter lid rim (33), and
      - a first and second lid lateral walls (32c) with respective first and second lid lateral rims (33c) of the perimeter lid rim (33).
Clause 3. The storage box (1) according to clause 2, wherein the body rear wall (22a), the body front wall (22b) and the first and second body lateral walls (22c) are substantially perpendicular to the body base (21).
Clause 4. The storage box (1) according to clause 2 or 3, wherein the body rear wall (22a) extends substantially perpendicular from the body base (21) a body rear wall height (H1), wherein the body base (21) extends between the first and second body lateral walls (22c), and wherein the body rear wall height (H1) is substantially constant. Clause 5. The storage box (1) according to any of the preceding clauses, further comprising a hinge connection assembly (6) for pivotally attaching the plastic injected lid (3) to the plastic injected body (2).
Clause 6. The storage box (1) according to clause 5 when depends on clause 2, wherein the hinge connection assembly (6) comprises
   - a hinge shaft (61);
   - a body hinge support (62) outwardly protruding from the body rear wall (22a), the body hinge support (62) having a first through hole for accommodating the hinge shaft (61); and
   - a lid hinge support (63) outwardly protruding from the lid rear wall (32a), the lid hinge support (63) having a second through hole for accommodating the hinge shaft (61); and
   wherein the hinge shaft (61) is inserted into both the first and second through holes to pivotally interconnect the body hinge support (62) and the lid hinge support (63).
Clause 7. The storage box (1) according to any of clauses 2 to 6, wherein the first and second body lateral walls (22c) extend substantially perpendicular from the body base (21), and wherein each first and second body lateral wall (22c) comprises a stepped shape.
Clause 8. The storage box (1) according to clause 7, wherein each first and second body lateral wall (22c) comprises:
   - a first step portion (A), adjacent to the body rear wall (22a), having a first height (H2a), such that the body lateral rim (23c) at said first portion (A) is substantially parallel to the body base (21);
   - a second step portion (B), adjacent to the body front wall (22b), having a second height (H2b), such that the body lateral rim (23c) at said second step portion (B) is substantially parallel to the body base (21), and the second height (H2b) being lower than the first height (H2a); and
   - a third step portion (C), between the first step portion (A) and second step portion (B), such that the body lateral rim (23c) at said third step portion (C) has a third height (H2c) decreasing from the first step portion (A) to the second step portion (B).
Clause 9. The storage box (1) according to clause 8, wherein the first step portion (A) extends a first step portion length (L2a) in a direction extending between the body rear wall (22a) and the body front wall (22b); wherein the second step portion (B) extends a second step portion length (L2b) in a direction extending between the body rear wall (22a) and the body front wall (22b); and wherein the first step portion length (L2a) is greater than the second step portion length (L2b).
Clause 10. The storage box (1) according to clause 8 or 9, wherein the first step portion (A) extends a first step portion length (L2a) in a direction extending between the body rear wall (22a) and the body front wall (22b); wherein the third step portion (C) extends a third step portion length (L2c) in a direction extending between the body rear wall (22a) and the body front wall (22b); and wherein the first step portion length (L2a) is greater than the third step portion length (L2c).
Clause 11. The storage box (1) according to any of clauses 7 to 10, wherein the first and second lid lateral wall (32c) has a complementary stepped shape matching the first and second body lateral wall (22c) at the closed position.
Clause 12. The storage box (1) according to clause 11, wherein each first and second lid lateral wall (32c) comprises:
   - a first step portion (A'), adjacent to the lid rear wall (32a), having a first height (H3a), such that the lid lateral rim (33c) at said first portion (A') is substantially parallel to the lid cover (31);
   - a second step portion (B'), adjacent to the lid front wall (32b), having a second height (H3b), such that the lid lateral rim (33c) at said second step portion (B') is substantially parallel to the lid cover (31), and the second height (H3b) being greater than the first height (H3a); and
   - a third step portion (C'), between the first step portion (A') and second step portion (B'), such that the lid lateral rim (33c) at said third step portion (C') has a third height (H3c) increasing from the first step portion (A') to the second step portion (B').
Clause 13. The storage box (1) according to clause 12, wherein the first step portion (A') extends a first step portion length (L3a) in a direction extending between the lid rear wall (32a) and the lid front wall (32b); wherein the second step portion (B') extends a second step portion length (L3b) in a direction extending between the lid rear wall (32a) and the lid front wall (32b); and wherein the first step portion length (L3a) is greater than the second step portion length (L3b).
Clause 14. The storage box (1) according to clause 12 or 13, wherein the first step portion (A') extends a first step portion length (L3a) in a direction extending between the lid rear wall (32a) and the lid front wall (32b); wherein the third step portion (C') extends a third step portion length (L3c) in a direction extending between the body rear wall (32a) and the body front wall (22b); and wherein the first step portion length (L3a) is greater than the third step portion length (L3c).
Clause 15. The storage box (1) according to any of clauses 2 to 14, further comprising a locking device (7) comprising a first coupling portion (71) arranged at a central region of the body front wall (22b), and a second coupling portion (72) arranged at a central region of the lid front wall (32b), wherein the second coupling portion (72) is configured to engage the first coupling portion (71) at the closed position.
Clause 16. The storage box (1) according to clause 15, wherein the locking device (7) comprises a locking member to lock the first coupling portion (71) and the second coupling portion (72) at the closed position.
Clause 17. The storage box (1) according to clause 15 or 16, wherein the first and second coupling elements (71, 72) of the locking device (7) are snap-fit joint elements.
Clause 18. The storage box (1) according to any of clauses 15 to 17, wherein the body front rim (23b) and the lid front rim (33b) at their respective central regions, are free from the protrusion (4) and the receiver (5).
Clause 19. The storage box (1) according to any of clauses 2 to 18, wherein the body front wall (22b) comprises a lower portion (8) extending from the body base (21), the lower portion (8) comprising two recesses (81) for assembling respective side lights electrically connected with the towing vehicle.
Clause 20. The storage box (1) according to clause 19, wherein the lower plate (8) of the body front wall (22b) further comprises a recess (82) for assembling a license plate.
Clause 21. The storage box (1) according to any of the preceding clauses, wherein the receiver (5) comprises a U-shaped cross-section.
Clause 22. The storage box (1) according to any of clauses 1 to 21, wherein the perimeter lid rim (33) comprises the receiver (5) and the perimeter body rim (23) comprises the protrusion (4).
Clause 23. The storage box (1) according to clause 22, wherein the outer lid flange (34) comprises a L-shaped cross-section protruding outwardly from the lid wall (32), such that the outer lid flange (34) and the lid wall (32) forms the receiver (5) defining a U-shaped cross-section.
Clause 24. The storage box (1) according to any of clauses 1 to 21, wherein the perimeter lid rim (33) comprises the protrusion (4) and the perimeter body rim (23) comprises the receiver (5).
Clause 25. The storage box (1) according to any of the preceding clauses, wherein the protrusion (4) comprises a height (h) less of 25 mm, preferably between 20 and 5 mm, and more preferably about 13 mm, and a width (w) less of 15 mm, preferably between 10 and 3 mm, and more preferably about 6 mm.
Clause 26. The storage box (1) according to claim 25, wherein the receiver (5) comprises a height (h1) less of 30 mm, preferably between 25 and 10 mm, and more preferably about 16 mm, and a width (w1) less than 20 mm, preferably between 15 and 7 mm, and more preferably 11 mm.
Clause 27. The storage box (1) according to any of the preceding clauses, wherein the plastic injected body (2) comprises reinforcing ribs (9), optionally at an outer side of the body base (21) and/or an outer side of the body rear wall (22a).
Clause 28. The storage box (1) according to any of the preceding clauses, wherein the plastic injected body (2) and/or the plastic injected lid (3) comprises a thermoplastic polymer.
Clause 29. The storage box (1) according to clause 28, wherein the thermoplastic polymer comprises a recycled thermoplastic polymer.
Clause 30. The storage box (1) according to clause 28 or 29, wherein the thermoplastic polymer comprises polypropylene.
Clause 31. A load carrier assembly (100) for a towing vehicle comprising:
   - a storage box (1) according to any of clauses 1 to 30; and
   - a support structure (10) connected to the body base (2) of the storage box (1), wherein the support structure (10) comprises a coupling device (11) couplable with a tow bar of a towing vehicle.
Clause 32. Method for manufacturing a storage box (1) according to any of clauses 1 to 30, the method comprising:
   - plastic injection moulding a body plastic material to form the plastic injected body (2);
   - plastic injection moulding a lid plastic material to form the plastic injected lid (3); and
   - pivotally attaching the plastic injected body (2) to the plastic injected lid (3).
Clause 33. Method for manufacturing a storage box (1) according to clause 32, wherein the body plastic material and/or the lid plastic material comprises a thermoplastic polymer.
Clause 34. Method for manufacturing a storage box (1) according to clause 33, wherein the body plastic material and/or the lid plastic material comprises a recycled thermoplastic material.
Clause 35. Method for manufacturing a storage box (1) according to any of clauses 32 to 34, comprising mounting a hinge connection assembly (6) for pivotally attaching the plastic injected body (2) to the plastic injected lid (3).

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A storage box (1) couplable with a tow bar of a towing vehicle, the storage box (1) comprising
- a plastic-injected body (2) for carrying a load; and
- a plastic-injected lid (3) pivotally attached to the plastic-injected body (2) for shifting the storage box (1) between a closed position and an open position;
wherein the plastic-injected body (2) comprises
- a body base (21), and
- a body wall (22) extending from the body base (21), the body wall (22) comprising a perimeter body rim (23);
wherein the plastic-injected lid (3) comprises
- a lid cover (31), and
- a lid wall (32) extending from the lid cover (31), the lid wall (32) comprising a perimeter lid rim (33) having an outer lid flange (34) protruding outwardly from the lid wall (32);
such that the perimeter lid rim (33) and the perimeter body rim (23) face each other when the storage box (1) is in the closed position; and
wherein one of the perimeter lid rim (33) and the perimeter body rim (23) comprises a protrusion (4) and the other of the perimeter lid rim (33) and the perimeter body rim (23) comprises a receiver (5) to receive the protrusion (4) to form a sealing joint at the closed position.

2. The storage box (1) according to claim 1, wherein
- the body wall (22) comprises
- a body rear wall (22a) with a body rear rim (23a) of the perimeter body rim (23),
- a body front wall (22b) with a body front rim (23b) of the perimeter body rim (23), and
- a first and second body lateral walls (22c) with respective first and second body lateral rims (23c) of the perimeter body rim (23); and
- the lid wall (32) comprises
- a lid rear wall (32a) with a lid rear rim (33a) of the perimeter lid rim (33),
- a lid front wall (32b) with a lid front rim (33b) of the perimeter lid rim (33), and
- a first and second lid lateral walls (32c) with respective first and second lid lateral rims (33c) of the perimeter lid rim (33).

3. The storage box (1) according to claim 1 or 2, further comprising a hinge connection assembly (6) for pivotally attaching the plastic-injected lid (3) to the plastic-injected body (2).

4. The storage box (1) according to claim 2 or 3, wherein the first and second body lateral walls (22c) extend substantially perpendicular from the body base (21), and wherein each of the first and the second body lateral wall (22c) comprises a stepped shape.

5. The storage box (1) according to claim 4, wherein the first and second lid lateral wall (32c) has a complementary stepped shape matching the first and second body lateral wall (22c) at the closed position.

6. The storage box (1) according to any of the claims 2 to 5, further comprising a locking device (7) comprising a first coupling (71) arranged at the plastic-injected body (2), and a second coupling (72) arranged at the plastic-injected lid (3), wherein the second coupling (72) is configured to engage the first coupling (71) at the closed position.

7. The storage box (1) according to any of claims 1 to 6, wherein the perimeter lid rim (33) comprises the receiver (5) and the perimeter body rim (23) comprises the protrusion (4).

8. The storage box (1) according to claim 7, wherein the outer lid flange (34) comprises an L-shaped cross-section protruding outwardly from the lid wall (32), such that the outer lid flange (34) and the lid wall (32) forms the receiver (5) defining a U-shaped cross-section.

9. The storage box (1) according to any of claims 1 to 6, wherein the perimeter lid rim (33) comprises the protrusion (4) and the perimeter body rim (23) comprises the receiver (5).

10. The storage box (1) according to any of the preceding claims, wherein the plastic-injected body (2) comprises reinforcing ribs (9), optionally at an outer side of the body base (21) and/or an outer side of the body rear wall (22a).

11. The storage box (1) according to any of the preceding claims, wherein the plastic-injected body (2) and/or the plastic-injected lid (3) comprises a thermoplastic polymer.

12. The storage box (1) according to claim 11, wherein the thermoplastic polymer comprises a recycled thermoplastic polymer.

13. The storage box (1) according to any of claims 11 or 12, wherein the thermoplastic polymer comprises polypropylene.

14. A load carrier assembly (100) for a towing vehicle comprising:
- a storage box (1) according to any of claims 1 to 13; and
- a support structure (10) connected to the body base (21) of the storage box (1), wherein the support structure (10) comprises a coupling device (11) couplable with a tow bar of a towing vehicle.

15. Method (1000) for manufacturing a storage box (1) according to any of claims 1 to 13, the method comprising:
- plastic injection moulding a body plastic material (1001) to form the plastic-injected body (2);
- plastic injection moulding a lid plastic material (1002) to form the plastic-injected lid (3); and
- pivotally attaching (1003) the plastic-injected body (2) to the plastic-injected lid (3).
